# EUROPEAN PATENT APPLICATION

(11) **EP 2 562 631 A2**
(43) Date of publication of application: **27.02.2013**
(21) Application number: 12181410.7
(22) Date of filing: 22.08.2012
(51) Int. Cl.: G06F 3/0488, H04M 1/67

(54) **Apparatus and method for unlocking a touch screen device**

(30) Priority: 25.08.2011 US 201161527398 P; 06.08.2012 US 201213567499
(71) Applicant: Samsung Electronics Co., Ltd., Suwon-si, Gyeonggi-do, 443-742 (KR)
(72) Inventor: Wright, Aaron, 443-742 Gyeonggi-do (KR); Gattu, BalaSubrahmanyam, 443-742 Gyeonggi-do (KR)
(74) Representative: Hutter, Jacobus Johannes

(57) **Abstract**

An apparatus and method for unlocking a device including a touchscreen display are provided. The method includes detecting an input to the touchscreen, determining whether the input corresponds to a request to unlock the device, determining whether the input is associated with a functionality of the device, unlocking the device if the input corresponds to a request to unlock the device, and loading, if the input is determined to be associated with a functionality of the device, an application associated with the input.

## Description

### BACKGROUND OF THE INVENTION

### 1. Field of the Invention:

The present invention relates to an apparatus and method for transitioning from an idle/locked state of a device to an active/unlocked state of a device. More particularly, the present invention relates to an apparatus and method for receiving input for transitioning a mobile terminal from an idle/locked state and automatically loading an application associated with the input.

### 2. Description of the Related Art:

Mobile terminals are developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), E-mail, games, remote control of short range communication, an image capturing function using a mounted digital camera, a multimedia function for providing audio and video content, a scheduling function, and many more. With the plurality of features now provided, a mobile terminal has effectively become a necessity of daily life.

A mobile terminal according to the related art include an input means that enables a user to input a command associated with unlocking the mobile terminal or otherwise transitioning the mobile terminal to an active state. For example, a mobile terminal according to the related art may be configured such that a user may unlock the mobile terminal by pressing a button, performing a screen swipe gesture on a touch screen, or some other generic method. When the mobile device is unlocked or transitioned to the active state, the user may interface with the device and use the interface to control the mobile device.

According to the related art, the methods for unlocking the mobile terminal are an independent process. In other words, the methods for unlocking the mobile terminal are not associated with any other interaction of the device. Consequently, if a mobile terminal is transitioned to an unlocked or active state using a method or interface according to the related art, then the mobile terminal enters the unlocked or active state such that the mobile terminal has the most recently used application loaded. Alternatively, if a mobile terminal is transitioned to an unlocked or active state using a method or interface according to the related art, then the mobile terminal enters the unlocked or active state such that the mobile terminal has the home screen loaded. Therefore, the methods for unlocking the mobile terminal according to the related art are not associated with the applications loaded and/or displayed to the user upon entering the unlocked or active state.

The methods for unlocking the mobile terminal according to the related art are relatively inefficient. For example, according to the related art, if a mobile terminal is locked or in an inactive state and a user wishes to use a mobile device for a specific function, the user must first unlock the mobile terminal using a method for unlocking the mobile terminal according to the related art, and thereafter input commands for loading a desired application or for performing a desired functionality.

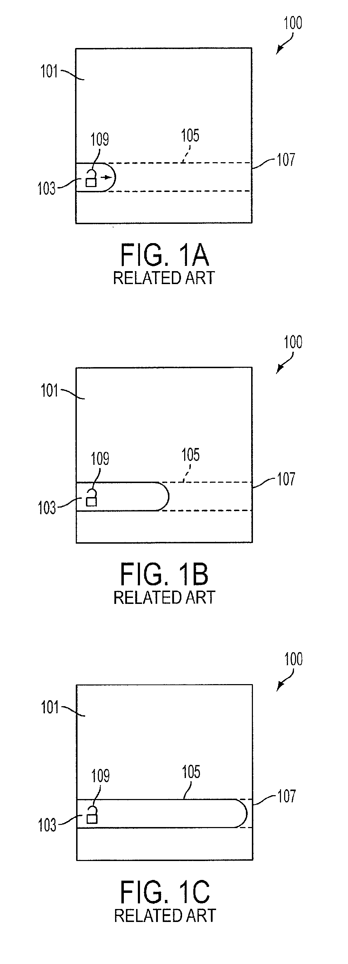

FIGs. 1A-1C are illustrations of a mobile terminal interface according to the related art.

Referring to FIGs. 1A-1C, a mobile terminal interface 100 includes a screen 101. The screen 101 is displayed on the mobile terminal interface 100 when the mobile terminal is in an inactive or locked state. The screen 101 includes an unlock image 109. In order to unlock the mobile terminal, a user must manipulate the unlock image 109 so as to drag the unlock image 109 from the initial lock position 103 across the lock region 105 to the unlock position 107. To manipulate the unlock image 109, the user touches the unlock image 109 on the touchscreen, drags the unlock image 109 while maintaining contact with the touchscreen until the unlock image 109 is dragged to the unlock position 107. When the unlock image 109 is dragged to the unlock position 107, the mobile terminal is transitioned to an active or unlocked state. As the mobile terminal transitions to the active or unlocked state, the mobile terminal loads and displays a home screen or a most recently used application.

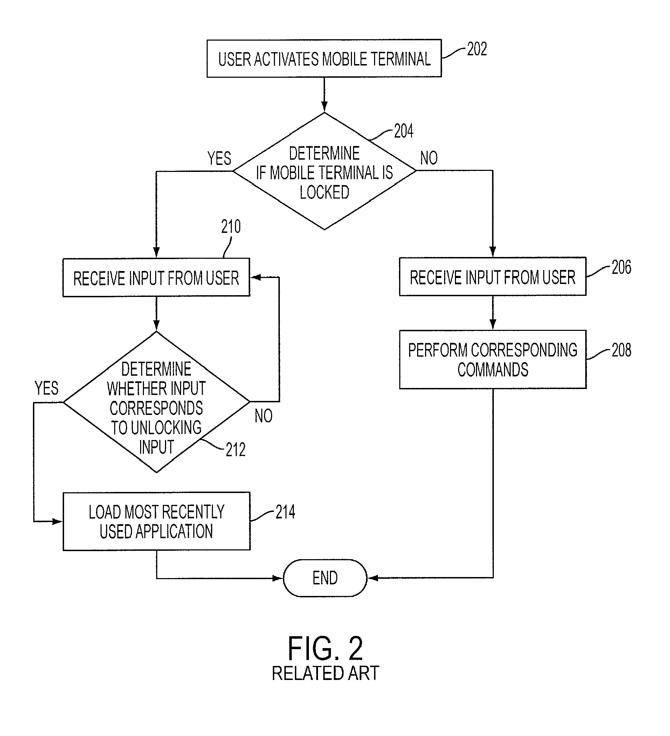

FIG. 2 is a flowchart illustrating a method of unlocking a mobile terminal according to the related art.

Referring to FIG. 2, a mobile terminal is activated at step 202. If the mobile terminal is activated, the mobile terminal determines whether it is in a locked or inactive state at step 204. If the mobile terminal is not in a locked or inactive state, then the method proceeds to step 206 at which the mobile terminal receives an input. When an input is received at step 206, the mobile terminal proceeds to step 208 at which the mobile terminal performs a command corresponding to the received input.

If at step 204 the mobile terminal is determined to be in a locked state, then the method proceeds to step 210 at which the mobile terminal receives an input. When an input is received at step 210, the mobile terminal determines whether the received input corresponds to an unlocking input at step 212. In other words, the mobile terminal determines whether the received input corresponds to an input defined to unlock the mobile terminal. If the received input corresponds to an unlocking input at step 212, then the most recently used application is loaded at step 214. Alternatively, a home screen may be displayed at step 214. If the received input does not correspond to an unlocking input at step 212, then the mobile terminal returns to step 210 at which the mobile terminal receives another input.

Accordingly, there is a need for an apparatus and method for transitioning a mobile terminal from an idle/locked state to an active/unlocked state that is more efficient.

The information above is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for efficiently transitioning a mobile terminal from an idle/locked state to an active/unlocked state.

In accordance with an aspect of the present invention, a method for unlocking a device including a touchscreen display is provided. The method includes detecting an input to the touchscreen, determining whether the input corresponds to a request to unlock the device, determining whether the input is associated with a functionality of the device, unlocking the device if the input corresponds to a request to unlock the device, and loading, if the input is determined to be associated with a functionality of the device, an application associated with the input.

In accordance with another aspect of the present invention, an apparatus for transitioning from a locked to an unlocked state is provided. The apparatus includes a touchscreen, and at least one controller for detecting an input to the touchscreen, for determining whether the input corresponds to a request to unlock the device, for determining whether the input is associated with a functionality of the device, for unlocking the device if the input corresponds to a request to unlock the device, and for loading, if the input is determined to be associated with a functionality of the device, an application associated with the input.
In exemplary embodiments of the present invention, the at least one controller is configured for displaying at least one icon that is associated with a predefined application.
In exemplary embodiments of the present invention, a selection of one of the at least one displayed icons followed by a gesture corresponding to a drag of the selected icon to a predefined area of the touchscreen corresponds to a request to unlock the device, and the application associated with the input corresponds to the application associated with the icon dragged to the predefined area of the touch screen.
In exemplary embodiments of the present invention, a touch corresponding to a gesture in which one of the at least one displayed icons is circled corresponds to the selection of one of the at least one displayed icons.
In exemplary embodiments of the present invention, a touch on an area of the touchscreen corresponding to one of the at least one displayed icons corresponds to the selection of one of the at least one displayed icons.
In exemplary embodiments of the present invention, the at least one controller is configured for storing at least one gesture as a request to unlock the device, and for associating each of the at least one gesture with a corresponding specific functionality.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIGs. 1A-1C are illustrations of a mobile terminal interface according to the related art;

FIG. 2 is a flowchart illustrating a method of unlocking a mobile terminal according to the related art;

FIG. 3 is a flowchart illustrating a method of unlocking a mobile terminal according to an exemplary embodiment of the present invention;

FIG. 4 is a flowchart illustrating a method for configuring a method of unlocking a mobile terminal according to an exemplary embodiment of the present invention;

FIG. 5 is block diagram schematically illustrating a configuration of a mobile terminal according to an exemplary embodiment of the present invention;

FIGs. 6A-6B illustrate mobile terminal interfaces according to exemplary embodiments of the present invention; and

FIGs. 7A-7B illustrate mobile terminal interfaces according to exemplary embodiments of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention include an apparatus and method for unlocking a device including a touchscreen display.

Exemplary embodiments of the present invention present multiple choices for allowing the user to launch into a particular setting, profile, state, or application in combination with a step of unlocking or answering the phone. By choosing one of the applications, profiles, settings, or state choices at the step of unlocking or answering the phone, the user also unlocks the device. According to exemplary embodiments of the present invention, integrating the step of launching a specific functionality or application at the step of unlocking the device forms a 2-in-1 time saving step which adds convenience and simplicity. According to exemplary embodiments of the present invention, a user is able to accept the default choices, or customize/configure the choices presented at the step of unlocking the device in accordance with the user preferences. For example, a user may assign the camera application to an unlock gesture such that the camera application is immediately launched after such an unlock gesture is used to unlock the device.

According to exemplary embodiments of the present invention, methods for unlocking the device may include making contact with a touchscreen device in a predefined area, and then dragging the touch to the intended unlock choice. The start region or unlock region may vary in shape or size. When the user touches in the unlock region, the device will unlock to a choice destination (e.g., to a selected functionality or application to be loaded upon transition to the unlocked state). According to exemplary embodiments of the present invention, the user must continue to touch the touchscreen while moving in the direction of the destination icon or region. As a result, the user effectively connects the two regions via a touch gesture. Once the user completes such an interaction, the user releases the touch of the touchscreen. The device will then unlock the device and launch the chosen unlock choice (e.g., functionality or application). According to other exemplary embodiments of the present invention, a lassoing gesture may be made around the intended unlock choice. For example, the user would touch the touchscreen and draw a circular shape around the intended unlock choice.

According to exemplary embodiments of the present invention, visual feedback may be provided to the user which indicates success or failure of the attempt to unlock the device.

According to exemplary embodiments of the present invention, the method for unlocking the device may be used in any device whether mobile or stationary which requires locking.

According to exemplary embodiments of the present invention, the unlock choices may be set manually, automatically, or turned off.

According to exemplary embodiments of the present invention, the unlock choices may include launching applications, setting a particular mode, triggering a set of events, describing the user's mood, answering a question, and/or the like.

According to exemplary embodiments of the present invention, the unlocking method may comprise simple gestures or inputs, complex gestures or inputs, or user defined gestures or inputs.

According to exemplary embodiments of the present invention, the unlocking method can be user defined.

According to exemplary embodiments of the present invention, the method for answering the mobile device may include similar functionality to the method for unlocking the device. For example, the method for answering the mobile device may allow a user to choose from a contextual menu while answering a call from an idle and/or locked state.

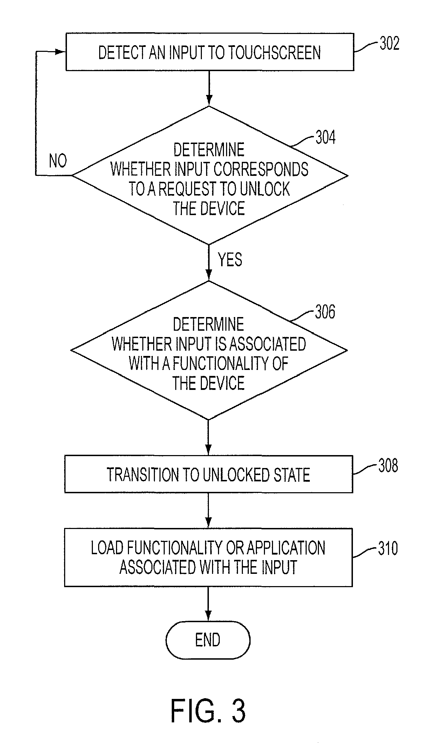

FIG. 3 is a flowchart illustrating a method of unlocking a mobile terminal according to an exemplary embodiment of the present invention.

Referring to FIG. 3, according to exemplary embodiments of the present invention, a mobile terminal may load (e.g., launch) a predefined functionality or an application upon transition from a locked to an unlocked state. For example, based on the input of a predefined input associated with unlocking the mobile terminal, the mobile terminal may automatically load a predefined functionality or application upon transition from a locked state to an unlocked state based on stored associations.

When the mobile terminal is in a locked state, the mobile terminal detects an input to the touchscreen at step 302. The input may be a gesture or series of gestures corresponding to touches on the touchscreen.

Upon detection of an input to the touch screen, the mobile terminal determines whether the detected input corresponds to a request to unlock the device at step 304. For example, the mobile terminal determines whether the detected input corresponds to a previously defined input for unlocking the mobile terminal. If the detected input is determined to not correspond to an input for unlocking the mobile terminal, then the mobile terminal returns step 302 at which the mobile terminal waits for detection of further input. If the detected input is determined to correspond to an input for unlocking the mobile terminal, then the mobile terminal may determine whether the detected input is associated with a functionality or an application stored on the mobile terminal.

According to exemplary embodiments of the present invention, an input for unlocking the mobile terminal may include a gesture or a plurality of gestures correspond to touches on the touch screen. For example, the input for unlocking the mobile terminal may include a selection gesture for selecting or otherwise identifying a desired functionality or application to be loaded upon transition of the mobile terminal to an unlocked state. As another example, the input for unlocking the mobile terminal may include an unlocking gesture for indicating a desire to unlock the mobile terminal. The input for unlocking the mobile terminal may include a selection gesture and an unlocking gesture such that the selection gesture selects the functionality or application to be loaded upon transition to an unlocked state and the unlocking gesture unlocks the mobile terminal and initiates transition to the unlocked state.

The mobile terminal may determine whether the input is associated with a functionality or an application stored on the mobile terminal at step 306. According to exemplary embodiments of the present invention, if the input is associated with a functionality or an application stored on the mobile terminal, then the mobile terminal may ensure that such functionality or application is loaded upon transition to an unlocked state. According to exemplary embodiments of the present invention, if the input is not associated with a functionality or an application stored on the mobile terminal, then upon transition to the unlocked state the mobile terminal may load a home screen or a most recently used application.

At step 308, the mobile terminal transitions to the unlocked state. Upon transition to the unlocked state, the mobile terminal loads a functionality or application associated with the input at step 310. For example, if the detected input is determined to correspond to an input for unlocking the mobile terminal, then upon transition to the unlocked state, the mobile terminal automatically loads functionality or an application associated with the input. As another example, upon transition to the unlocked state, the mobile terminal may automatically load functionality associated with the icon or other indicia selected by the selection gesture.

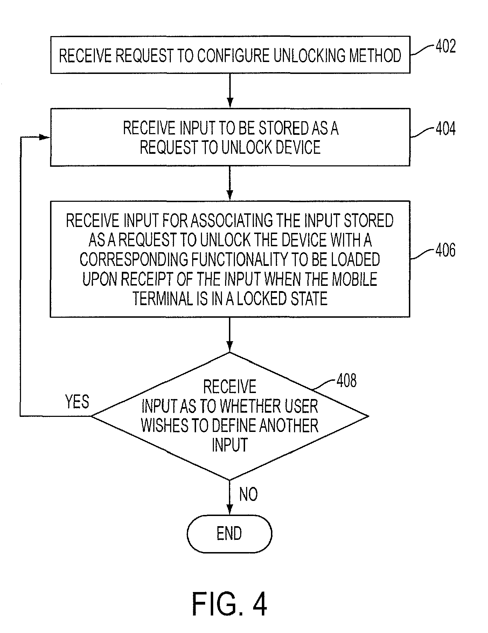

FIG. 4 illustrates a flowchart illustrating a method for configuring a method of unlocking a mobile terminal according to exemplary embodiments of the present invention.

Referring to FIG. 4, according to exemplary embodiments of the present invention, a user may configure the method of unlocking the mobile terminal. For example, the user may customize the method of unlocking the mobile terminal. In other words, the use may define inputs which unlock the mobile terminal and thus transition the mobile terminal to an unlocked state if the inputs are received when the mobile terminal is in a locked state.

At step 402, the mobile terminal receives a request from the user to configure the unlocking method. If the mobile terminal receives a request to configure the unlocking method, then the mobile terminal proceeds to request the user to enter an input to be stored as a request to unlock the mobile terminal.

At step 404, the mobile terminal receives an input to be stored as a request to unlock the mobile terminal. In other words, the mobile terminal receives an input which the user intends on storing as an input for unlocking the mobile terminal. According to exemplary embodiments of the present invention, the input to be stored as a request to unlock the mobile device may include a gesture that serves as a selection of a defined functionality or application.

At step 406, the mobile terminal receives an input for associating the input stored as a request to unlock the mobile terminal (e.g., an input for unlocking the mobile terminal) with a corresponding functionality to be loaded upon receipt of the input when the mobile terminal is in a locked state. For example, the mobile terminal receives an input from the user in which the user defines an association between at least one gesture and a functionality or application to be loaded upon transitioning to an unlocked state from a locked state by virtue of an input of the gesture when the mobile terminal is in a locked state.

According to exemplary embodiments of the present invention, the input to be stored as a request to unlock the mobile device may include a gesture corresponding to movement of a touch on the touchscreen. In other words, the gesture may be a shape outlined by the user as the user maintains contact with the touchscreen. For example, the gesture may correspond to a user moving a touch on the touchscreen in the shape of a circle, a square, a triangle, a figure-eight, and/or the like.

According to other exemplary embodiments of the present invention, the gesture may correspond to a series of taps on a specific region of the touchscreen. For example, the gesture may correspond to a predefined number of taps on an icon or other indicia displayed on the touchscreen. As an example, the user may define the gesture to be a defined number of taps within a defined period of time. For example, the gesture may be defined to be the tapping on an icon or other indicia 3 times with each tap on the icon or other indicia being within 1 second of each other.

According to other exemplary embodiments of the present invention, the gesture may correspond to manipulations made on or in proximity to icons or other indicia displayed on the touchscreen. For example, the gesture may correspond to a touch made so as to circle at least one icon or other indicia (e.g., form a touch lasso around at least one icon or other indicia). As another example, the gesture may correspond to a touch made in a defined shape (e.g., a square, triangle, or the like) around at least one icon or other indicia. The gesture may correspond to a touch from one edge of at least one icon or indicia to the other end of such at least one icon or other indicia. The gesture may also correspond to a touch in the form of a cross across the at least one icon or other indicia.

According to other exemplary embodiments of the present invention, the input to be stored as a request to unlock the mobile device may include a gesture corresponding to a selection of at least one icon or indicia displayed on the touch screen, followed by another gesture corresponding to an unlocking gesture. The gesture corresponding to selection of at least one icon or indicia may be used for a user to identify the associated functionality or application the user wishes to be loaded upon transition of the mobile terminal from the locked state to the unlocked state. The unlocking gesture may be used to trigger transition of the mobile terminal from the locked state to the unlocked state and loading of the functionality or application associated with the selection. As an example, the gesture corresponding to selection of an icon or indicia may be a touch made so as to circle the icon or other indicia. As another example, the gesture corresponding to selection of an icon or indicia may be a touch on the desired icon or other indicia. An example of the unlocking gesture may be a touch corresponding to a dragging of the selected icon or other indicia to a region on the touchscreen which is defined as an unlock region.

After the mobile terminal receives an input to be stored as a request to unlock a device and after the mobile terminal receives an input corresponding to an associated functionality or application to be loaded, the mobile terminal stores the input and associated functionality or application to be loaded.

According to exemplary embodiments of the present invention, a mobile terminal may store a plurality of inputs for unlocking the mobile terminal and store a corresponding at least one association to a functionality or application for each of the plurality of inputs. After the mobile terminal stores the input and associated functionality or application to be loaded, the mobile terminal requests whether the user wishes to define a new input and corresponding association with a functionality or application. At step 408, the mobile terminal receives input as to the user wishes to define another input and corresponding association with a functionality or application. If the mobile terminal receives indication that the user wishes to define another input, then the method returns to step 404. If the mobile terminal receives an indication that the user does not wish to define another input, then the method for configuring a method of unlocking a mobile terminal ends.

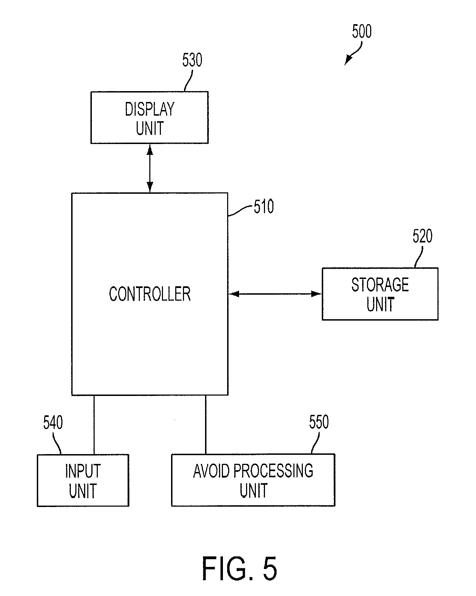

FIG. 5 is block diagram schematically illustrating a configuration of a mobile terminal according to an exemplary embodiment of the present invention.

Referring to FIG. 5, a mobile terminal 500 according to an exemplary embodiment of the present invention includes an audio-processing unit 550, an input unit 540, a display unit 530, a storage unit 520, and a controller 510. As an example, the mobile terminal 500 having such a configuration may load a specific functionality or application upon transition to an unlocked state. The mobile terminal 500 may transition to the unlocked state based on input entered through the input unit 540.

According to exemplary embodiments of the present invention, the mobile terminal 500 may be configured to define (e.g., associated and/or store) an input for unlocking the mobile terminal 500. The mobile terminal 500 may be so configured based on interaction between a user and the mobile terminal 500 via the display unit 530 and the input unit 540. The mobile terminal 500 may be configured such that when an input for unlocking the mobile terminal 500 is input via the input unit 540, the mobile terminal transitions to an unlocked state and automatically loads a previously defined functionality or application associated with the specific input for unlocking the mobile terminal. Hereinafter, each component of the mobile terminal 100 will be explained in detail.

The audio processing unit 550 may be formed as an acoustic component. The audio processing unit 550 transmits and receives audio signals, and encodes and decodes the audio signals. For example, the audio processing unit 550 may include a CODEC and an audio amplifier. The audio processing unit 550 is connected to a Microphone (MIC) and a Speaker (SPK). The audio processing unit 550 converts analog voice signals inputted from the Microphone (MIC) into digital voice signals, generates corresponding data for the digital voice signals, and transmits the data to the controller 510. Further, the audio processing unit 550 converts digital voice signals inputted from the controller 510 into analog voice signals, and outputs the analog voice signals through the Speaker (SPK). Further, the audio processing unit 550 may output various audio signals generated in the mobile terminal 500 through the Speaker (SPK). For example, the audio processing unit 550 can output audio signals according to an audio file (e.g. MP3 file) replay, a moving picture file replay, and the like through the speaker. In particular, according to exemplary embodiments of the present invention, an input for unlocking the mobile terminal may be input via the audio processing unit 550 if the predefined input for unlocking the mobile terminal corresponds to a sound.

The input unit 540 may include input keys and function keys for receiving user input. For example, the input unit 540 may include input keys and function keys for receiving an input of numbers or various sets of letter information, setting various functions, and controlling functions of the mobile terminal 500. For example, the input unit 540 may include a calling key for requesting a voice call, a video call request key for requesting a video call, a termination key for requesting termination of a voice call or a video call, a volume key for adjusting output volume of an audio signal, a direction key, and the like. In particular, the input unit 540 according to exemplary embodiments of the present invention may transmit to the controller 510 signals related to an input for unlocking the mobile terminal 500. Such an input unit 540 may be formed by one or a combination of input means such as a touch pad, a touchscreen, a button-type key pad, a joystick, a wheel key, and the like.

The display unit 530 displays information inputted by user or information to be provided to user as well as various menus of the mobile terminal 500. For example, the display unit 530 may provide various screens according to a user of the mobile terminal 500, such as an idle screen, a message writing screen, a calling screen, and the like. In particular, the display unit 530 according to exemplary embodiments of the present invention can display a locked screen, and/or a screen for configuring a method of unlocking the mobile terminal 500. As an example, the display unit 530 can output an interface with which a user may interface to unlock the mobile terminal 500. For example, the display unit 530 may display an interface which the user may manipulate or otherwise enter inputs via a touch screen to enter inputs for unlocking the mobile terminal 500. The display unit 530 can be formed as a Liquid Crystal Display (LCD), an Organic Light Emitting Diode (OLED), an Active Matrix Organic Light Emitting Diode (AMOLED), and the like. However, exemplary embodiments of the present invention are not limited to these examples. Further, the display unit 530 can perform the function of the input unit 540 if the display unit 530 is formed as a touch screen.

The storage unit 520 can store user data, and the like, as well a program which performs operating functions according to an exemplary embodiment of the present invention. For example, the storage unit 520 may store a program for controlling general operation of a mobile terminal 500, an Operating System (OS) which boots the mobile terminal 500, and application program for performing other optional functions such as a camera function, a sound replay function, an image or video replay function, a Near Field Communication (NFC) function, and the like. Further, the storage unit 520 may store user data generated according to a user of the mobile terminal, such as, for example, a text message, a game file, a music file, a movie file, and the like. In particular, the storage unit 520 according to exemplary embodiments of the present invention may store a table which stores a mapping of inputs for unlocking mobile terminal with a functionality or application to be loaded upon transition of the mobile terminal 500 to the unlocked state. For example, the storage unit 520 may store associations between at least one input for unlocking the mobile terminal 500 and a predefined functionality or application to be automatically loaded upon transition of the mobile terminal 500 to the unlocked state.

According to exemplary embodiments of the present invention, the mobile terminal 500 comprises at least one controller 510. The at least one controller 510 may control general operation of the mobile terminal 500. For example, the controller 510 may control operation of the various components or units included in the mobile terminal 500. The controller 510 may transmit a signal to the various components included in the mobile terminal 500 and control a signal flow between internal blocks of the mobile terminal 500. In particular, the controller 510 according to exemplary embodiments of the present invention can control to load (e.g., launch), upon transition to the unlocked state, a predefined functionality or application associated with an input for unlocking the mobile terminal 500 entered via the input unit 540. To this end, the controller 510 may determine whether the input entered via the input unit 540 corresponds to an input for unlocking the mobile terminal 500, determine whether the input for unlocking the mobile terminal 500 has an associated functionality or application to be loaded upon transition to the unlocked state, and load the associated functionality or application upon transition to the unlocked state based on the associations or mappings stored in the storage unit 520.

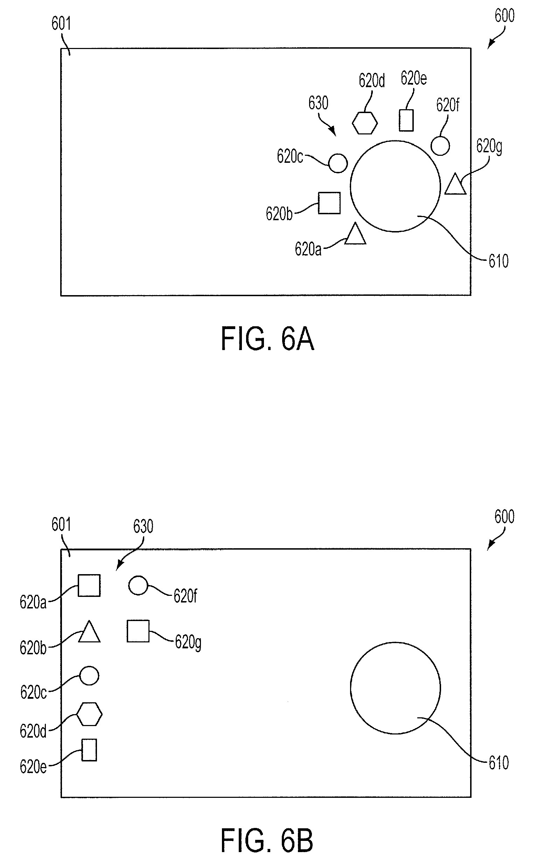

FIGs. 6A-6B illustrate mobile terminal interfaces according to exemplary embodiments of the present invention.

Referring to FIG. 6A, a display unit of the mobile terminal may display a mobile terminal interface 600. The mobile terminal interface 600 includes a screen 601. The screen 601 is displayed on the mobile terminal interface 600 when the mobile terminal is in an inactive or locked state. The screen 601 includes an unlock region 610 and a start region 630. According to exemplary embodiments of the present invention, the start region 630 includes at least one icon or indicia 620a-620g each of which is associated with a functionality or application to be loaded upon transition of the mobile terminal to the unlocked state. As an example, the mobile terminal may be transitioned from the locked state to the unlocked state by dragging at least one icon or indicia 620a-620g from the start region 630 to the unlock region 610. In other words, the mobile terminal is transitioned to the unlocked state when an input for unlocking the mobile terminal is input such that an icon or indicia 620a-620g is selected (e.g., through a selection gesture) and dragged from the start region 630 to the unlock region 610 (e.g., through an unlocking gesture). As an example, the user may effectively connects the start region 630 with the unlock region 610 through a touch gesture (e.g., in which an icon or indicia 620a-620g is dragged).

Referring to FIG. 6B, the screen 601 may be configurable or customizable by the user. According to exemplary embodiments of the present invention, the user may change a size of the unlock region 610, change a shape of the unlock region 610, change the position of the unlock region on the screen 601, and/or the like. According to exemplary embodiments of the present invention, the user may change a size of the start region 630, change a shape of the start region 630, change a position of the start region 630, change an arrangement of the icon or indicia 620a-620g, and/or the like.

According to exemplary embodiments of the present invention, the user may customize or define the configuration or arrangement of the unlock region, 610, the start region 630, and the icon or indicia 620a-620g so as to prevent unintentional unlocking of the mobile terminal or to make the process for unlocking the mobile terminal easier. For example, the size of the start region 630 and/or the unlock region 610 may be increased to make unlocking of the mobile terminal easier. Conversely, the size of the start region 630 and/or the unlock region may be decreased to make unlocking the mobile terminal more difficult thereby reducing the likelihood that unintentional unlocking of the mobile terminal occurs. As another example, a distance between the start region 630 and the unlock region 610 may be increased or decreased.

According to exemplary embodiments of the present invention, icons or indicia 620a-620g may be added or removed from the start region 630. The user may also configure the functionality or application associated with each icon or indicia 620a-620g. To this end, the user may customize which functionality or application is loaded directly upon transition to the unlocked state for each icon or indicia 620a-620g. The user may also configure the shapes, sizes, or graphic displayed in association with each icon or indicia 620a-620g.

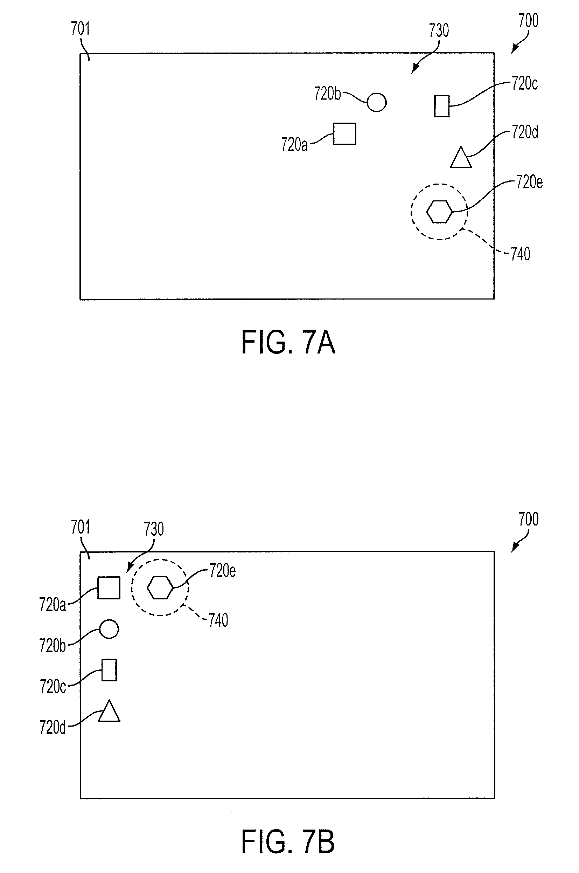

FIGs. 7A-7B illustrate mobile terminal interfaces according to exemplary embodiments of the present invention.

Referring to FIG. 7A, a display unit of the mobile terminal may display a mobile terminal interface 700. The mobile terminal interface 700 includes a screen 701. The screen 701 is displayed on the mobile terminal interface 700 when the mobile terminal is in an inactive or locked state. The screen 701 includes a start region 730. According to exemplary embodiments of the present invention, the start region 730 includes at least one icon or indicia 720a-720e each of which is associated with a functionality or application to be loaded upon transition of the mobile terminal to the unlocked state. As an example, the mobile terminal may be transitioned from the locked state to the unlocked state by entering an input for unlocking the mobile terminal. For example, the input for unlocking the mobile terminal may correspond to a gesture formed on or in a predefined proximity to an icon 720a-720e.

According to exemplary embodiments of the present invention, the input for unlocking the mobile terminal may correspond to a touch on the touchscreen corresponding to a touch lasso input 740 is formed around a selected icon or indicia 720a-720e associated with a desired functionality or application to be loaded upon transition to an unlocked state. In other words, the mobile terminal may be transitioned to the unlocked state when an input for unlocking the mobile terminal is input such that a user forms a lasso around a selected icon or indicia 720a-720e. According to other exemplary embodiments of the present invention, the input for unlocking the mobile terminal may correspond to a touch in which a user forms a shape (e.g., a circle, a square, a triangle, or the like) around one of the icon or indicia 720a-720e. According to other exemplary embodiments of the present invention, the input for unlocking the mobile terminal may correspond to a touch in which a user inputs a series of taps on one icon or indicia 720a-720e corresponding to a predefined input for unlocking the mobile terminal. Further, according to other exemplary embodiments of the present invention, the input for unlocking the mobile terminal may correspond to a touch in which a user inputs a series of touches on an icon or indicia 720a-720e so as to form a cross, or to form a scratching motion over the selected icon 720a-720e.

Referring to FIG. 7B, the screen 701 may be configurable or customizable by the user. According to exemplary embodiments of the present invention, the user may change a size of the start region 730, change a shape of the start region 730, change a position of the start region 730, change an arrangement of the icon or indicia 720a-720e, and/or the like.

According to exemplary embodiments of the present invention, the user may customize or define the configuration or arrangement of the start region 730, and the icon or indicia 720a-720e.

According to exemplary embodiments of the present invention, icons or indicia 720a-720e may be added or removed from the start region 730. The user may also configure the functionality or application associated with each icon or indicia 720a-720e. To this end, the user may customize which functionality or application may be loaded directly upon transition to the unlocked state. The user may also configure the shapes, sizes, or graphic displayed in association with each icon or indicia 720a-720e.

A method for unlocking a mobile terminal according to exemplary embodiments of the present invention may be implemented in an executable program command form by various computer means and be recorded in a non-transitory computer readable recording medium. The computer readable recording medium may include a program command, a data file, and a data structure individually or a combination thereof. The program command recorded in a recording medium may be specially designed or configured for exemplary embodiments of the present invention, or may be known to a person having ordinary skill in a computer software field.

The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, a hardware device such as ROM, RAM, flash memory storing and executing program commands, and the like. Further, the program command includes a machine language code created by a compiler and a high-level language code executable by a computer using an interpreter. The foregoing hardware device may be configured to be operated as at least one software module to perform an operation of exemplary embodiments of the present invention.

As explained above, an apparatus and a method for unlocking a mobile terminal in which a functionality or application is automatically loaded upon transition to the unlocked state may increase the efficiency of the mobile terminal and the process for unlocking the mobile terminal. By combining multiple steps into a single step, the method for unlocking a mobile terminal according to the exemplary embodiments of the present invention saves a user time and reduces the number of inputs that a user is required to enter. By assigning or associating applications, tasks, or modes to inputs for unlocking the mobile terminal, exemplary embodiments of the present invention provide significant benefits and convenience to the user. For example, exemplary embodiments of the present invention allow multiple choices at the unlock step. The multiple choices presented allow a user to launch in a particular setting, profile, state, or application in combination with the step of unlocking. Alternatively, the multiple choices may be combined with the step of answering the phone.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for unlocking a device including a touchscreen display, the method comprising:
detecting an input to the touchscreen;
determining whether the input corresponds to a request to unlock the device;
determining whether the input is associated with a functionality of the device;
unlocking the device if the input corresponds to a request to unlock the device; and
loading, if the input is determined to be associated with a functionality of the device, an application associated with the input.

2. The method of claim 1, wherein the device is a mobile terminal.

3. The method of claim 2, wherein the input includes at least one gesture which corresponds to a touch of the touchscreen and a specific movement of the touch on the touchscreen.

4. The method of claim 3, further comprising:
storing at least one gesture as a request to unlock the device; and
associating each of the at least one gesture with a corresponding specific functionality.

5. The method of claim 4, wherein the at least one gesture includes a movement of a touch on the touchscreen so as to form a corresponding shape,
wherein the corresponding shape includes at least one of a square, a triangle, a circle, and a figure-eight.

6. The method of claim 2, further comprising:
displaying at least one icon that is associated with a predefined application.

7. The method of claim 6, wherein a selection of one of the at least one displayed icons followed by a gesture corresponding to a drag of the selected icon to a predefined area of the touchscreen corresponds to a request to unlock the device, and
wherein the application associated with the input corresponds to the application associated with the icon dragged to the predefined area of the touch screen.

8. The method of claim 7, wherein a touch corresponding to a gesture in which one of the at least one displayed icons is circled corresponds to the selection of one of the at least one displayed icons.

9. The method of claim 7, wherein a touch on an area of the touchscreen corresponding to one of the at least one displayed icons corresponds to the selection of one of the at least one displayed icons.

10. The method of claim 6, further comprising:
storing at least one gesture as a request to unlock the device; and
associating each of the at least one gesture with a corresponding specific functionality.

11. An apparatus for transitioning from a locked to an unlocked state, the apparatus comprising:
a touchscreen; and
at least one controller for detecting an input to the touchscreen, for determining whether the input corresponds to a request to unlock the device, for determining whether the input is associated with a functionality of the device, for unlocking the device if the input corresponds to a request to unlock the device, and for loading, if the input is determined to be associated with a functionality of the device, an application associated with the input.

12. The apparatus of claim 11, wherein the input includes at least one gesture which corresponds to a touch of the touchscreen and a specific movement of the touch on the touchscreen.

13. The apparatus of claim 12, wherein the at least one controller is configured for storing at least one gesture as a request to unlock the device, and for associating each of the at least one gesture with a corresponding specific functionality.

14. The apparatus of claim 13, wherein the at least one gesture includes a movement of a touch on the touchscreen so as to form a corresponding shape,
wherein the corresponding shape includes at least one of a square, a triangle, a circle, and a figure-eight.

15. The apparatus of claim 11, wherein the at least one controller is configured for displaying at least one icon that is associated with a predefined application.
